# EUROPEAN PATENT SPECIFICATION

(11) **EP 0 856 842 B1**
(45) Date of publication and mention of the grant of the patent: **02.06.2004**
(21) Application number: 98100988.9
(22) Date of filing: 21.01.1998
(51) Int. Cl.: G11B 17/04, G11B 17/30

(54) **Disk playback apparatus**
Plattenwiedergabegerät
Appareil pour la reproduction de disque

(30) Priority: 31.01.1997 JP 1955097; 31.03.1997 JP 8099097; 31.03.1997 JP 7951497
(43) Date of publication of application: 05.08.1998
(60) Divisional application: 03013268.2
(73) Proprietor: CLARION Co., Ltd., Tokio (JP)
(72) Inventor: Sato, Nobuhiro, Bunkyo-ku, Tokyo (JP); Hayashi, Hideki, Bunkyo-ku, Tokyo (JP)
(74) Representative: Fritsche, Rainer, Dipl.-Wirtsch.-Ing.

(56) References cited:
- EP-A- 0 284 445
- EP-A- 0 366 452
- EP-A- 0 575 665
- EP-A- 0 724 261
- EP-A- 0 729 146
- WO-A-95/28342
- DE-A- 4 408 120
- GB-A- 2 266 617
- US-A- 4 701 900
- PATENT ABSTRACTS OF JAPAN vol. 016, no. 160 (P-1340), 20 April 1992 (1992-04-20) & JP 04 010266 A (HITACHI ELECTRON ENG CO LTD;OTHERS: 01), 14 January 1992 (1992-01-14)

## Description

### BACKGROUND OF THE INVENTION

### 1. Field of the Invention

The present invention relates to a disk playback apparatus, and particularly relates to a structure for certainly transporting a disk to a normal chucking position on a playback means.

### 2. Description of the Related Art

Recently, a disk apparatus such as a CD (Compact Disk) player of the type wherein a magazine adapted to accommodate a plurality of disks is loaded therein and a disk selected by a user from the plural disks is automatically selected and played thereby is increasing from a standpoint of improving a sense of use by simplifying disk exchange operations of the user as far as possible. In order to reproduce plural disks sequentially at a common disk playback section for reproducing information recorded on each of the disks, the disk apparatus such as mentioned above is configured to fetch a desired disk from the loaded magazine, transport the disk to playback means, and return the disk into the magazine after completion of the reproduction.

Particularly, some of the above mentioned disk apparatuses employ a system using a magazine which accommodates plural disk holders, each of which holds therein one disk, in an arrangement where respective holders can be drawn out independently, and performing a loading operation of a disk from the inside of the magazine to the playback position and an ejecting operation of the disk from the playback position into the magazine by simply moving back and forth the holder. In the disk apparatus based on this system, the disk holder holding therein a selected disk is transported to a position nearby the disk playback section by the moving forth operation, and returned into the magazine by the moving back operation after the disk is received in a predetermined playback position. In order to eject a disk when exchanging the disk with another one, when the magazine is ejected, or the like, the empty disk holder is transported to a position nearby the disk playback section with the moving forth operation, then the disk holder is returned into the magazine with the disk held therein by the moving back operation after the disk at the playback position is recovered in the holder.

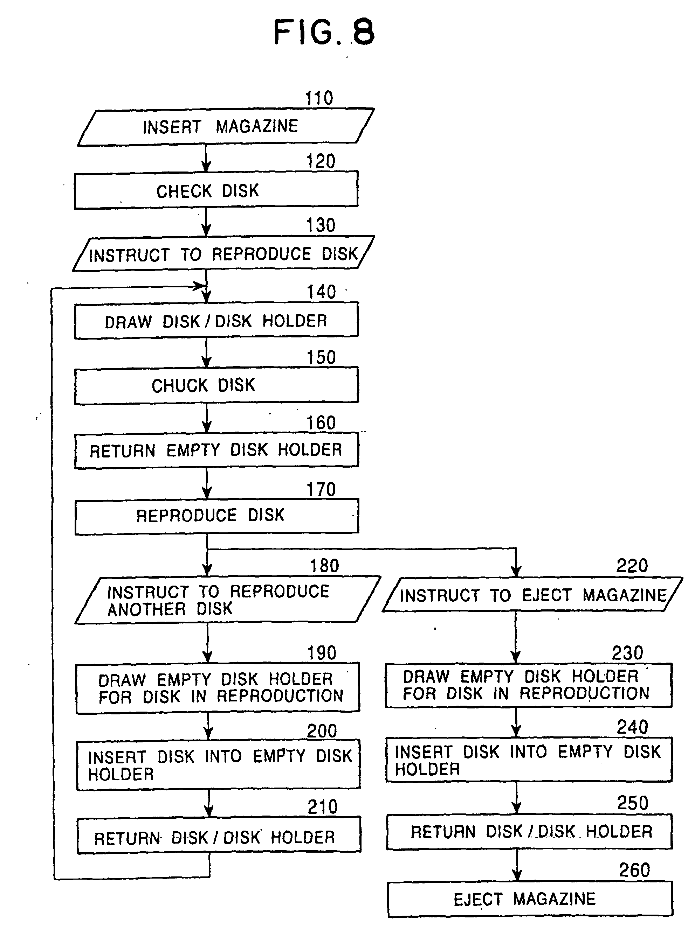

FIG. 8 is a flowchart for explaining operating procedures of the disk playback apparatus having the system such as mentioned above by way of example. As shown in FIG. 8, when a magazine is inserted (Step 110), disk checking operation for determining existence of a disk is carried out using, some appropriate processes (Step 120). Subsequently, if a user instructs to reproduce the disk (Step 130), then the disk holder accommodating therein the disk corresponding to the playback instruction is drawn out from the magazine and transported to a loading position nearby a playback unit, thereby the disk held in the disk holder is transported to a predetermined chucking position on the playback unit (Step 140), then the disk is chucked at the chucking position on the playback unit (Step 150), only the empty disk holder is returned into the magazine (Step 160), and the disk is reproduced (Step 170).

If an instruction to reproduce another disk is directed by the user during Step 170 of reproducing the disk (Step 180), then the empty holder for the disk in reproduction is drawn out from the magazine (Step 190), the disk in reproduction is inserted into this empty disk (Step 200), and the disk holder accommodating therein the disk is returned into,the magazine (Step 210), then control returns to Step 140 for drawing out the disk holder in which the specified another disk is accommodated.

If an instruction to eject the magazine is directed by the user during Step 170 of reproducing the disk (Step 220), then the empty holder corresponding to the disk in reproduction is drawn out from the magazine (Step 230), the disk in reproduction is inserted into this empty disk (Step 240), and the disk holder accommodating therein the disk is returned into the magazine (Step 250), then the magazine is ejected (Step 260).

In the conventional disk playback apparatus as in the foregoing, the disk holder is typically transported by using a holder drawing member which can reciprocate in the horizontal direction, and moving the holder drawing member by engaging a fingernail-shaped projection disposed on the holder drawing member with an engaging section disposed at one end of the disk holder. During transporting the disk holder as mentioned above, if the disk is not sufficiently inserted into the disk holder or the disk is displaced from the normal accommodation position of the disk holder, when the disk holder reaches a normal loading position of the playback means, the disk is displaced from the normal chucking position on the playback means.

In this case, subsequent disk chucking operation can not be properly performed, which may induce a poor chucking condition. If disk reproduction operation is carried out under such bad chucking conditions as mentioned above, the quality of the disk reproduction may become poor. Further, as the disk can not be sufficiently inserted into the disk holder when recovering the disk into the disk holder, there is a possibility that the disk can not be recovered.

The abovementioned operations of loading a disk into the playback position or ejecting a disk into the magazine in the disk playback apparatus are both performed by a device called "disk changer".

By the way, in the magazine for use in the conventional disk changer as in the foregoing, disk holders are inserted from an aperture of the magazine into a predetermined accommodation position within the magazine. At this time, if the insertion is insufficient, the holder may be accommodated in the magazine with the holder protruding outward beyond the predetermined accommodation position. When the disk holder protrudes outward beyond the predetermined accommodation position of the disk holder, it can become impossible to transport the disk holder.

Thus, in the case that the disk holder is transported by engaging a fingernail-shaped projection provided at the holder drawing member with an engaging section provided on one end of the disk holder as mentioned above, the projection of the holder drawing member is disposed to meet the position of the engaging section of the disk holder stored in a predetermined accommodation position within the magazine. Therefore, if the disk holder protrudes outward beyond the predetermined accommodation position in the magazine, the engaging section can not be engaged with the protrusion of the holder drawing member, and it can become impossible to transport the disk. Alternately, a part of the disk holder protruding outward improperly engages with the holder or any other part of the mechanism, which may results in subsequent defective performance. There exist the abovementioned disadvantages similarly when using the magazine which accommodates a disk tray of the type of placing thereon a disk as well as when using the magazine which accommodate a disk holder of the type of holding a disk as a disk holding unit.

Among various types of conventional disk changer devices, some disk changer devices in which the loading direction of the magazine and the drawing-out direction of the disk holder are same are specifically called as "end loading type disk changer device".

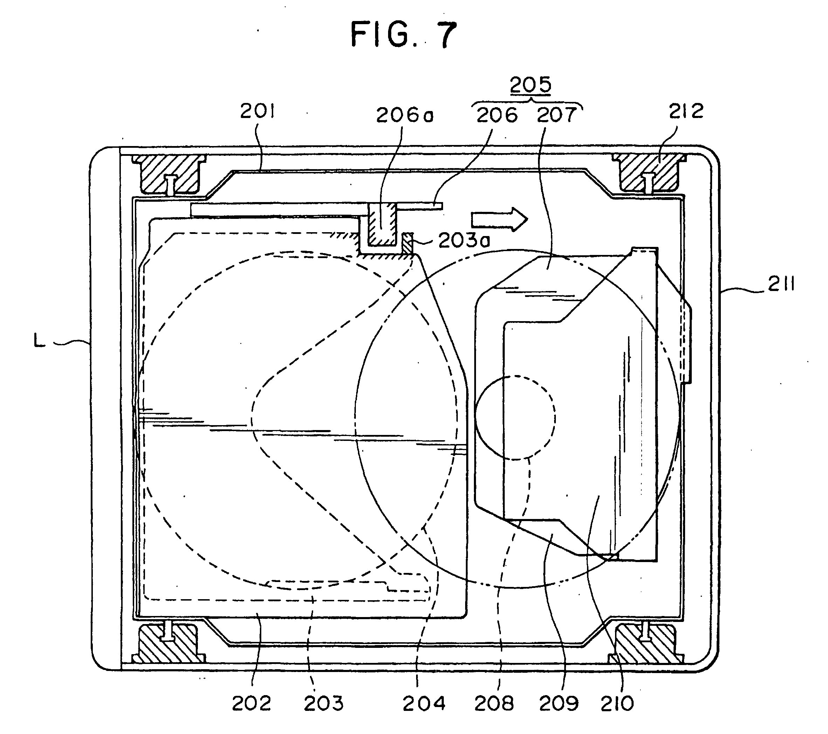

FIG. 7 is a plan view showing an end loading type on-vehicle disk changer device by way of example. As shown in FIG. 7, a magazine 202 which is inserted through a magazine insertion opening L is loaded in a magazine loading position which is disposed in the left hand part of the figure in the chassis 201 of the disk changer device. The magazine 202 accommodate plural disk holders 203 which are arranged in a vertical stack. Each disk holder 203 accommodates one disk which is inserted thereto in the direction parallel to the main surface of the disk holder 203, and slidably loaded into the magazine 202. An engaging section 203a for drawing out the disk holder 203 is disposed at one end of the disk holder 203.

A lift unit 205 is disposed in the chassis 201 of the device as shown in the right-hand part of the figure and supported to be movable in the vertical direction with respect to the chassis 201. The lift unit 205 is a combination of a holder drawing member 206 for drawing out the disk holder 203 and a playback unit 207 for reproducing a disk 204.

Among these components, the holder drawing member 206 is mounted on a chassis not shown of the lift unit 205 to be movable in the disk transporting direction, i.e. a horizontal direction in the figure, and a fingernail-shaped projection 206a which engages with the engaging section 203a is provided at one end of the holder drawing member 206.

The lift unit 205 is moved upward or downward according to a disk selection instruction in order to adjust the height of the holder drawing member 206 to be flush with the disk holder 203 accommodating therein the selected disk 204. On the other hand, the playback unit 207 comprises a drive plate 209 having a rotatable turntable 208 on which the disk 204 is mounted, a clamp arm 210 for chucking the disk 204 on the turntable 208, and the like.

The chassis 201 of the device is contained in an outer case 211, supported against the outer case 211 via a damper 212, and therefore provides a structure which enables isolation from the vehicle vibrations.

By the way, the disk changer device shown in FIG. 7 as described in the foregoing transports the disk holder 203 by engaging the engaging section 203a of the disk holder 203 with the fingernail shaped projection 206a of the holder drawing member 206 and moving the holder drawing member 206 rightward in the figure. During transporting the disk holder 203 as mentioned above, in the case that the disk 204 is insufficiently inserted into the disk holder 203 and the disk 204 protrudes beyond the normal accommodation position in the disk holder 203, the disk 204 is displaced from the normal chucking position if the disk holder 203 reaches the normal loading position of the playback unit 207.

In this case, subsequent disk chucking operation may not be properly performed, which may induce a poor chucking condition. If disk reproduction operation is carried out under such bad chucking conditions as mentioned above, the quality of the disk reproduction may be degraded. Further, when recovering the disk 204 into the disk holder 203, there is a possibility that the disk 204 can not be sufficiently inserted into the disk holder 203 and, as a result, the recovery is failed.

Particularly, as shown in FIG. 7, compared with the other type disk changer devices, the end loading type disk changer device in which the loading direction of the magazine 202 and the drawing direction of the disk holder 203 is identical has a higher possibility that the disk 204 accommodated in the disk holder 203 or the disk holder 203 is popped out from the magazine 202 when the magazine 202 is forcefully inserted into the device. And at worst, it is thought that inconvenience such that the popped-out disk from the magazine 202 is dropped in the device is thought.

DE-A-44 08 120 being the closest prior art document from which the present invention starts, discloses a playback apparatus having a disk loading mechanism. This disk loading mechanism is arranged such that a disk damper is lifted to a first position before a disk tray or a disk holder, respectively, is drawn out from a magazine, and when the holder is moved into the space between a disk clamper chassis and a driving unit chassis, the disk clamper is lowered to a second position and confrontes a disk on the holder at a close intervall. Thereby, the disk is prevented from dislocating from the accomodating recess portion of the holder while it is being moved. When the tray has been moved into position, the disk clamper is further lowered so the disk is held between the turntable and the disk clamper. As a result, the disk is prevented from dislocating from the holder while the holder is being moved to the disk driving unit.

### SUMMARY OF THE INVENTION

Accordingly, an object of the present invention is to provide a highly reliable disk playback apparatus in which a disk can be certainly transported to a normal chucking position in playback means even if the disk is not accommodated in a normal accommodation position in a disk holder.

In order to achieve the above object, in accordance with an aspect of the present invention, a disk can be certainly transported to a normal chucking position of playback means irrespective of the accommodated condition of a disk in a disk holder by providing on the playback means a movable control member which can control the disk with respect to a normal chucking position using the butting against a disk holder

A disk playback apparatus in accordance with the present invention comprises a disk holder for accommodating therein a disk holder, playback means for reproducing a disk, and holder movement control means for drawing out the disk holder from an initial position thereof to a loading position near the playback means, chucking a disk accommodated in the disk holder to the playback means, and returning the disk holder to the initial position, wherein the playback means comprises a rotatable control member and an urging means as described below.

More specifically, the rotatable control member is a rotatable member for controlling the disk which is accommodated in this disk holder with respect to the normal chucking position by using the butting against the disk holder, and the urging means is the means for urging the rotatable control member in the direction departing from the disk, wherein the rotatable control member comprises a disk control section and a holder butting section. The disk control section which is disposed at one end of the rotatable control member controls the disk with respect to said normal chucking position, while the holder butting section which is disposed at the other end of the rotating control section butts against the disk holder. The rotatable control member is pressed by this disk holder via the holder butting section when the disk holder is drawn out to the loading position, and thereby held at a disk control position corresponding to the diameter of the disk accommodated in this disk holder, and thus allows the disk control section to control the disk with respect to the normal chucking position at this disk control position.

In accordance with the present invention having a configuration in the foregoing, when the disk holder having therein a disk is drawn out to the loading position, a rotatable control member is pressed by this disk holder and held at a disk control position, therefore the rotatable control member can control the disk with respect to the normal chucking position. That is, even if the disk is not accommodated in the normal accommodation position in the disk holder, the disk position can be corrected by the rotatable control member at the time when the disk holder is drawn to the loading position. Accordingly, the disk can be certainly transported to the normal chucking position irrespective of the accommodated condition of the disk in the disk holder.

In accordance with a preferred form of the present invention, the disk holder and the rotatable control member are configured as described below. As disk holders, plural types of disk holders are provided, each of which can accommodate one of plural different-sized disks which are different in diameter. The rotatable control member is configured to control each of the different-sized disks with respect to the normal chucking position by the disk control section at each of the plural disk control positions corresponding to each of the different-sized disks. Each of the plural types of disk holders is provided with a butting section which butts against the holder butting section of the rotatable control member and presses the same when the disk holder is drawn to the loading position, and holds the rotatable control member at the disk control position corresponding to the accommodated disk size.

In accordance with the preferred form as mentioned above, for each of plural types of disk holders, each of which accommodate one of plural different-sized disks, the rotatable control member is pressed by the disk holder and held at each of disk control positions corresponding to each disk size when the disk holder is drawn out to the loading position. Thus each of the different-sized disks can be controlled with respect to the normal chucking position by the rotatable control member at each of the plural disk control positions. Therefore, the plural different-sized disks can be certainly transported to the normal chucking position by a common rotatable control member irrespective of the accommodated condition of the disk.

The present invention will become apparent from the following detailed descriptions of illustrative embodiments thereof to be read referring to the accompanying drawings.

### BRIEF DESCRIPTION OF THE DRAWINGS

FIG. 1 is a plan view of one form of a disk playback apparatus in accordance with the present invention, especially showing an initial state in the case that a 5-inch disk is improperly accommodated;
FIG. 2 is a plan view of a disk holder and playback unit of the disk playback apparatus shown in FIG. 1, especially showing a state the position of the 5-inch disk is corrected after the state shown in FIG. 1;
FIG. 3 is a plan view of the disk holder and playback unit of the disk playback apparatus shown in FIG. 1, especially showing a state of reproducing the disk of the 5-inch disk after the state shown in FIG. 2;
FIG. 4 is a plan view of the disk holder and playback unit of the disk playback apparatus shown in FIG. 1, especially showing an initial state in the case that a 3.5-inch disk is in the state of improperly accommodated;
FIG. 5 is a plan view of the disk holder and playback unit of the disk playback apparatus shown in FIG. 1, especially showing a state that the position of the 3.5-inch disk is corrected after the state shown in FIG. 4;
FIG. 6 is a plan view of the disk holder and playback unit of the disk playback apparatus shown in FIG. 1, especially showing a state of reproducing the disk of the 3.5-inch disk after the state shown in FIG. 5;
FIG. 7 is a plan view of a conventional disk changer device by way of example; and
FIG. 8 is a flowchart used for explaining operation procedures of a disk playback unit based on a system to which the present invention is applied.

### DESCRIPTION OF THE PREFERRED EMBODIMENTS

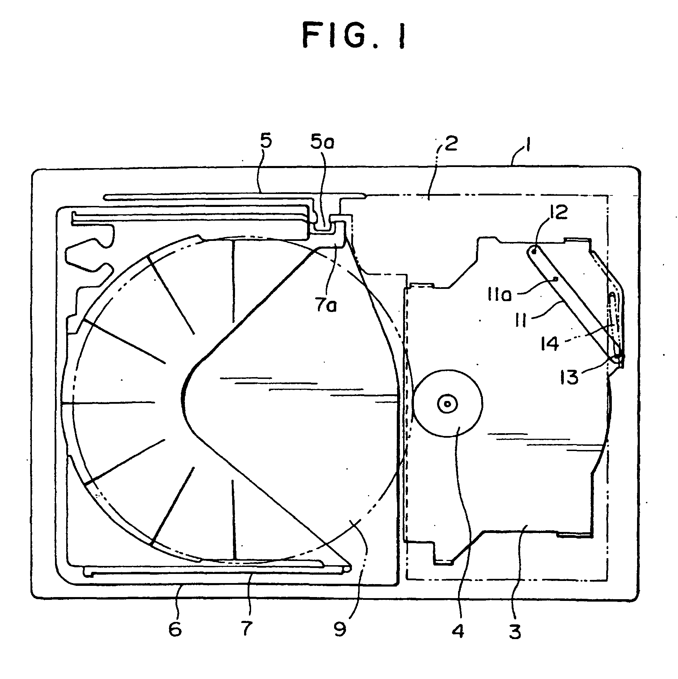

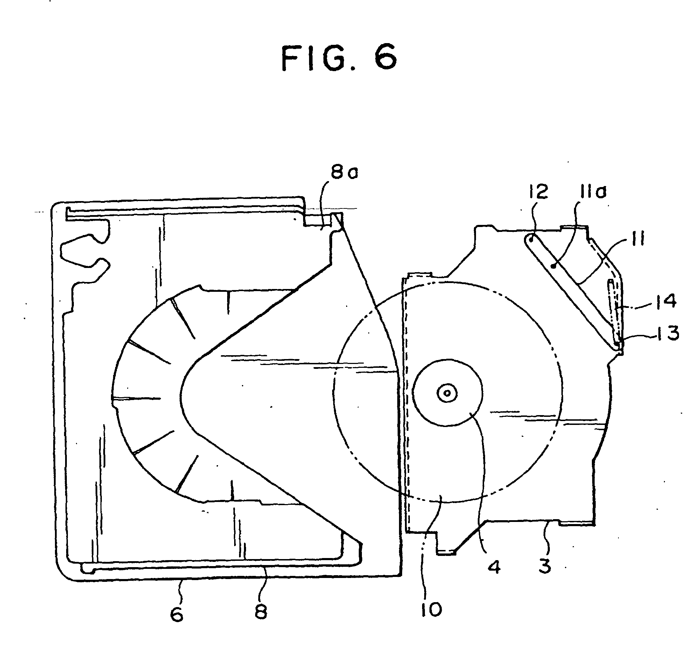

A concrete description will now be given to one preferred form wherein the present invention is applied to a disk playback apparatus for a 5-inch disk and a 3.5 inch disk referring to FIG. 1 to FIG. 6. In the specification, FIG. 1 is a plan view schematically showing a disk playback apparatus of the present form, especially showing the initial state that a 5-inch disk is improperly accommodated.

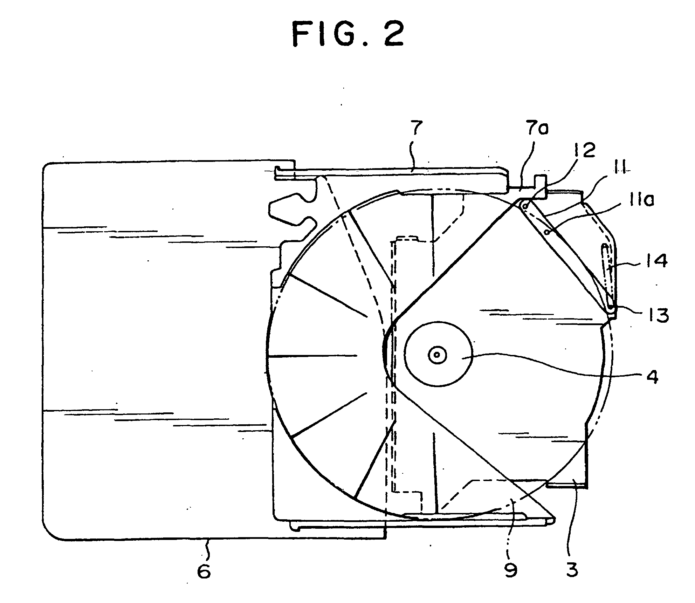

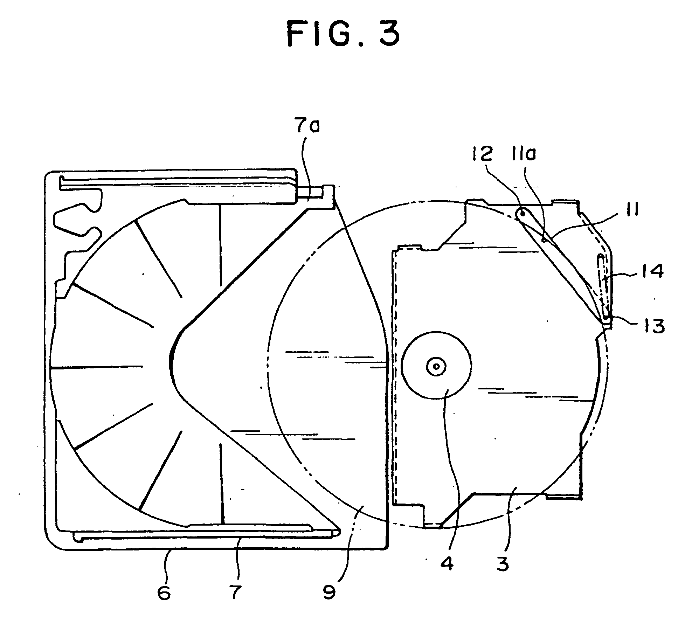

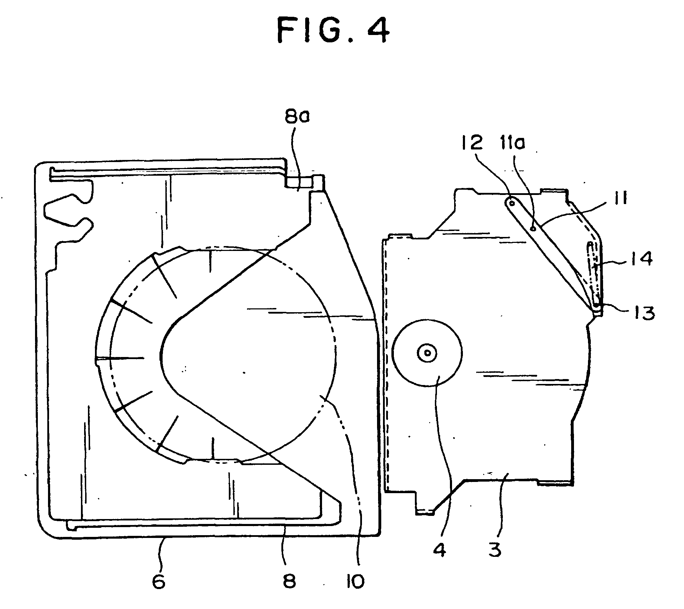

FIG. 2 to FIG. 6 are plan views which schematically show a plurality of operating conditions of the disk holder and playback unit of the disk playback apparatus shown in FIG. 1. Among these figures, FIG. 2 and FIG. 3 show a state of correcting a disk position and a state of reproducing the disk of the 5-inch disk after the state shown in FIG. 1, respectively. Fig. 4 to FIG. 6 show an initial state that a 3.5-inch disk is improperly accommodated, and subsequent states that the disk position is corrected and that the disk is reproduced, respectively.

### [Configuration]

Referring to FIG. 1, a lift unit (holder movement control means) 2 is supported to be vertically movable with respect to a case 1 of the apparatus as shown in the right-hand part of the case 1 of the figure. This lift unit 2 comprises a playback unit (playback means) 3 for reproducing a disk, a turntable 4 thereof, a holder drawing member 5 for drawing a disk holder, and the like.

Among these components, the holder drawing member 5 is mounted on the chassis of the lift unit 2 to be movable in the disk transporting direction, i.e. a horizontal direction in the figure; and a fingernail-shaped projection 5a which engages with the engaging section of a disk holder is disposed at one end of the holder drawing member 5. The lift unit 2 is adapted to be moved upward or downward according to a disk selection instruction in order to adjust the height of the holder drawing member 5 to be flush with the disk holder holding therein the selected disk.

A magazine 6 is loaded in a magazine loading section which is disposed in the case 1 of the apparatus as shown in the left-part of the figure. In the magazine 2, disk holders 7 for a 5-inch disk 9 as shown in FIG. 1 and disk holders 8 for a 3.5-inch disk 10 as shown in FIG. 4 are combined as necessary and accommodated in a vertical stack arrangement. As shown in FIG. 1 and FIG. 4, each of disk holders 7, 8 accommodates a 5-inch disk and a 3.5 inch disk, respectively, each of which is inserted into the disk holder in the direction parallel to the main surface thereon. An engaging sections 7a, 8a for drawing out respective disk holders 7, 8 are disposed at one end of the respective disk holders 7, 8, respectively.

In addition to the basic configuration as mentioned above, a control link 11 for controlling a disk with respect to a normal chucking position is provided on the chassis of the playback unit 3 to be rotatable around an axis 11a. At one end of the control link 11, a holder butting pin (holder butting section) 12 for butting against the disk holder 7 or 8, and an the other end thereof, a disk control pin (disk control section) 13 for controlling a disk 9 or 10 with respect to the normal chucking position. Further, a release spring 14 which urges the control link 11 in the direction departing from the disk 9 or 10, i.e. counterclockwise direction in the figure, is disposed on the chassis of the playback unit 3.

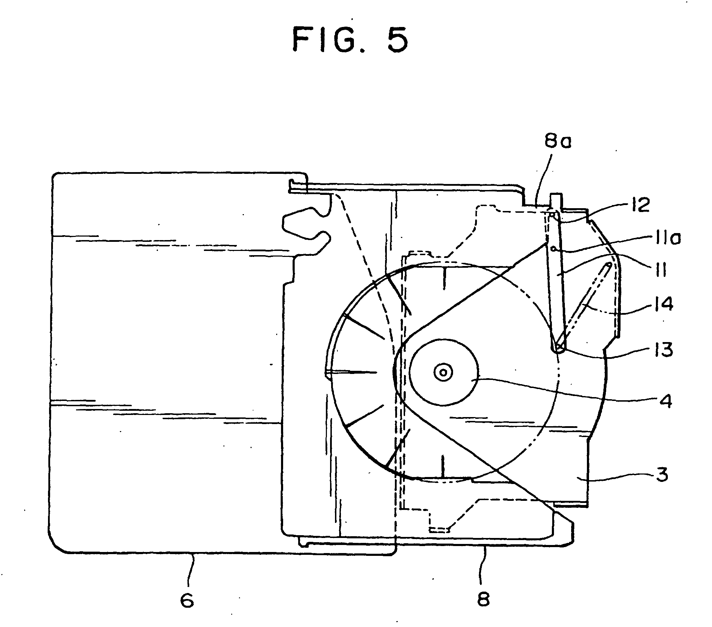

More particularly, when the disk holder 7 or 8 is transported to a normal loading position as shown in FIG. 2 or FIG. 5, the disk holder 7 or 8 butts against the butting pin 12, thereby the control link 11 is pressed by the disk holder, and held at an individual disk control position corresponding to the diameter of the disk held in the disk holder. That is, when the control link 11 butts against the disk holder 7 for 5-inch disk holder as shown in FIG.2, the control link 11 is held at a first disk control position corresponding to the disk diameter of the 5-inch disk 9 by the disk holder 7, and when the control link 11 butts against the disk holder 8 for 3.5-inch disk holder as shown in FIG.5, the control link 11 is held at a second disk control position corresponding to the disk diameter of the 3.5-inch disk 9 by the disk holder 8.

In this case, the difference of the disk control positions of the control link 11 based on the buttings against the disk holders 7 and 8 is derived from the difference in shape of the butting section of the disk holder 7 and 8. As it is clear by comparing FIG. 1 and FIG. 4, the disk holders 7 and 8 respectively have engaging sections 7a and 8a at a similar position. At one end of the engaging sections 7a and 8a on the side of the holder drawing member, a same recess shaped like a concave is provided respectively. On the other hand, the other ends of the engaging sections 7a and 8a have V-shaped recesses, however, respective recesses have different angles and are disposed at different positions to each other. Each of recesses which are disposed at different positions on the engaging sections 7a and 8a of the respective holders 7 and 8 forms a butting section against the holder butting pin 12 of the control link 11.

### [Operation]

In accordance with the disk playback apparatus having the configuration as mentioned above, a disk can be controlled with respect to the normal chucking position by the control link 11 while loading the disk. Therefore, if the disk is not accommodated in the normal accommodation position within the disk holder, the disk position can be corrected by the control link 11 when the disk holder is drawn out to the loading position. A brief description will be given below to this point.

### [Position Correction of 5-inch Disk]

Regarding the disk holder 7 for 5-inch disk which is accommodated in the magazine 6, when the 5-inch disk 9 held in this disk holder 7 is not located at the normal accommodation position as shown in FIG. 1, the position of the disk in the improperly accommodated state is corrected as follows. From the initial state shown in FIG. 1, the disk holder 7 is transported toward the playback unit 3 by moving the holder drawing member 5 rightward in the figure.

As a result, when the disk holder 7 reaches the loading position as shown in FIG. 2, the recess shaped like "<" in the engaging section 7a of this disk holder 7 and the holder butting pin 12 of the control link 11 butts against each other, and the control link 11 is pressed by the disk holder 7. Associated with the pressing by the disk holder 7, the control link 11 opposes the release spring 14 and rotates a little in the clockwise direction in the figure which is the disk control direction, and reaches the first disk control position. Then, in synchronization with the rotation of the control link 11, the disk control pin 13 presses the side of the 5-inch disk 9 to forcefully correct the position of the 5-inch disk 9, then holds this 5-inch disk in the normal chucking position on the turntable 4.

In this case, the control link 11 is mechanically locked to the first disk control position as shown in FIG. 2 by the disk holder 7 which is fixed on the loading position by the holder drawing member 5. Then, the position of the 5-inch disk 9 is forcefully corrected by the control link 11 which is mechanically locked as mentioned above, and the 5-inch disk 9 is mechanically chucked to the normal chucking position.

Thus good disk chucking is ensured by chucking the 5-inch disk 9 on the turntable 4 of the playback unit 3 at this normal chucking position after the position of the 5-inch disk 9 is corrected as mentioned above. After that, only the empty disk holder 7 is returned into the magazine 6 by moving the holder drawing member 5 in leftward in the figure and the 5-inch disk 9 by driving the playback unit 3. In this case, the control link 11 is released from the disk holder 7, therefore the control link 11 is rotated by the urging force of the release spring 14 in the counterclockwise direction in the figure which is the direction of departing from the disk, and returned to the initial position.

### [Position Correction of 3.5-inch Disk]

Regarding the disk holder 8 for 3.5-inch disk which is accommodated in the magazine 6, when the 3.5-inch disk 10 held in this disk holder 8 is not located at the normal accommodation position as shown in FIG. 4, the position of the disk in the improperly accommodated state is corrected as follows. From the initial state shown in FIG. 4, the disk holder 8 is transported toward the playback unit 3 by moving the holder drawing member 5 rightward in the figure.

As a result, when the disk holder 7 reaches the loading position as shown in FIG. 5, the V-shaped recess shaped in the engaging section 8a of this disk holder 8 and the holder butting pin 12 of the control link 11 butts against each other, and the control link 11 is pressed by the disk holder 7. Associated with the pressing by the disk holder 8, the control link 11 opposes the release spring 14 and rotates a little in the clockwise direction in the figure which is the disk control direction, and reaches the first disk control position. The V-shaped recess of the engaging section 8a of the disk holder 8 is located at a shallower position than that of the disk holder 7 for the 5-inch disk, and the disk holder 8 more strongly presses the control link 11 than the disk holder 7, therefore, the control link 11 rotate beyond the first disk control position as shown in FIG. 2, and reaches the second disk control position as shown in FIG. 5. Then, in synchronization with the rotation of the control link 11, the disk control pin 13 presses the side of the 3.5-inch disk 10 to forcefully correct the position of the 3.5-inch disk 10, then holds this 3.5-inch disk in the normal chucking position on the turntable 4.

In this case, the control link 11 is mechanically locked to the first disk control position as shown in FIG. 5 by the disk holder 8 which is fixed on the loading position by the holder drawing member 5. Then, the position of the 3.5-inch disk 10 is forcefully corrected by the control link 11 which is mechanically locked as mentioned above, and the 3.5-inch disk 10 is mechanically chucked to the normal chucking position.

Thus good disk chucking is ensured by chucking the 3.5-inch disk 10 on the turntable 4 of the playback unit 3 at this normal chucking position after the position of the 3.5-inch disk 10 is corrected as mentioned above. After that, only the empty disk holder 8 is returned into the magazine 6 by moving the holder drawing member 5 in leftward in the figure and the 3.5-inch disk 10 by driving the playback unit 3. In this case, the control link 11 is released from the disk holder 8, therefore the control link 11 is rotated by the urging force of the release spring 14 in the counterclockwise direction in the figure which is the direction departing from the disk, and returned to the initial position.

### [Effects]

As described above, in accordance with the present form, the position of the disk 9 or 10 in the state of improperly accommodated can be corrected using the transporting action of the disk holder 7 or 8 on account of the combination of the control link 11 and release spring 14 provided at a playback unit and the shape of the engaging sections 7a, 8a of the disk holders 7, 8. Therefore, the disk can be certainly transported to the normal chucking position irrespective of the disk accommodation state in the disk holder.

Especially, in accordance with the present form, the 5-inch disk 9 and the 3.5-inch disk 10 can be controlled respectively to the normal chucking position at each of the first and second disk chucking position by a single control link 11. Accordingly, two different-sized disks 9 and 10 can be certainly transported by a common control link 11 to the normal chucking position irrespective of the disk accommodation state in the disk holder. As the disks can be certainly transported to the normal chucking position, subsequent disk chucking operation can be performed well. Further, problems such as the failed disk playback or the disk recovery failure caused by the improper accommodation of the disk are not caused.

Thus, in accordance with the present form, there is provided a disk playback apparatus supported by a high degree of operational reliability wherein two different-sized disks 9 and 10 can be certainly transported to the normal chucking position by means of a simple structure using a common control link 11 and a common release spring 14 irrespective of the state of the disk accommodated in the holder. It is understood that the present invention is not limited to the abovementioned embodiments, and other various modifications may be made within the scope of the present invention as defined in the appended claims.

While an apparatus adapted for two different-sized disks, i.e. the 5-inch disk and the 3.5-inch disk, are explained in the description related to the preferred form mentioned above, the present invention are also similarly applicable to various apparatuses adapted for other various sized disks.

Further, the present invention is also applicable to an apparatus adapted for three or more different-sized disks. That is, as well as the preferred form in the foregoing, the positions of the plural different-sized disks can be controlled using a common rotatable control member by changing the shape of the butting section of the disk holder depending on the disk size. In such case that three or more different-sized disks are treated, a high degree of effectiveness may be provided by holding a movable control member at each of the plural disk control position corresponding to the different-sized disks and controlling each of different-sized disks with respect to each disk control position as well as the preferred form in the foregoing.

Further, in accordance with the present invention, it is possible to correspond one of the plural disk control positions of the movable control members with the initial position of the movable control member. For example, the preferred form mentioned above is configured to control a large size disk at a first disk control position, that is, a position slightly rotationally transferred from the initial position, a first position, and to control a small size disk at a second disk control position, that is, a position further rotationally transferred from the first disk control position, however, it is possible to correspond the initial position of the movable control member with the first disk control position. In this case, the movable control member does not have to rotate for controlling a large size disk, it can certainly control the large size disk at the initial position, therefore, for the movable control member, rotation is necessary only when controlling a small size disk. Accordingly, the motion of the movable control member can be simplified. That is, if the large size disk protrudes from the disk holder, the position of the large size disk can be easily corrected without rotating the movable control member from its initial position.

On the contrary, it is also possible to configure to correspond the position for controlling the small size disk with the initial position, and rotate the movable control member only when controlling the large size disk. Further, as described above, when three or more different-sized disks are treated, motion of the movable control member can be simplified by corresponding a position for controlling one of the different-sized disks with the initial position and rotating the movable control member when controlling other different-diameter disks.

Further, on the contrary, the present invention is also applicable to an apparatus adapted for one type of same sized disks. In this case, it is only necessary to control the movable control member to a single disk control position by the disk holder, therefore; the configuration can be simplified. Further, for the apparatus adapted for different-sized disks, it is also possible to configure to control the position of some specific disks only. For example, it is considered to control only the position of a small size disk which are easy to produce the accommodation failure condition.

In any case, the shape, number, and/or position of the movable control member, the holder butting section thereof, and the disk control section can be optionally selected. Further, in order to prevent the disk from damages caused by the movable control member, it is also considered to cover the surface of the disk control section of the movable control member by an elastic material or the like. Still further, in the present invention, concrete configurations of the disk holder, the playback means, the holder movement control means, and the like are optionally selected.

On the other hand, in the above description relating to the preferred form, the apparatus of the type of loading a magazine which is adapted to accommodate a plurality of disk holders is described, however, the present invention may be similarly applicable to the apparatus of the type of operating a single disk holder, and in this case, a high degree of effectiveness may be provided as in the abovementioned preferred form.

Further, the present invention is applicable to various disk playback apparatuses adapted for the CD, LD, MD, and some combination thereof, and in any case, a high degree of effectiveness as mentioned above relating to the preferred form may be provided.

As described above, in accordance with the the present invention, there is provided a disk playback apparatus supported by a high degree of operational reliability wherein a disk can be certainly transported to the normal chucking position on the playback means irrespective of the state of the disk accommodated in the holder by providing a movable control member on the playback means for controlling the disk with respect to the chucking position using the butting against the disk holder.

## Claims

1. A disk playback apparatus, comprising: a disk holder (7, 8) for accommodating a disk (9, 10), playback means (3) for reproducing a disk (9, 10) and holder movement control means (5) for drawing out the disk holder (7, 8) from an initial position thereof to a loading position near said playback means (3), chucking a disk (9, 10) which is accommodated in the disk holder (7, 8) to the playback means (3), and then returning the disk holder (7, 8) to said initial position;
**characterized in that** said playback means (3) comprises a rotatable control member (11) having at one end thereof a disk control section (13) for positioning the disk (9, 10) with respect to said normal chucking position, and at the other end thereof a holder butting section (12) for butting against the disk holder (7, 8); and urging means (14) for urging the rotatable control member (11) in the direction departing from the disk (9, 10); and **in**
**that** said rotatable control member (11) is configured to be pressed by this disk holder (7, 8) via said holder butting section (12) when the disk holder (7, 8) is drawn out to said loading position and held at a disk control position corresponding to the size of the disk (9, 10) accommodated in this disk holder (7, 8), and to position the disk (9, 10) with respect to said normal chucking position.

2. The disk playback apparatus in accordance with claim 1 comprising plural types of disk holders (7, 8) each of which can accommodate one of different-sized disks (9, 10); wherein said rotatable control member (11) is configured to position one of different-sized disks (9, 10) with respect to said normal chucking position by means of said disk control section (13) corresponding to said one of different-sized disks (9, 10); and
each of said plural types of disk holders (7, 8) comprises a butting section (7a, 8a) which butts against and presses said holder butting section (12) of said rotatable control member (11) when the disk holder (7, 8) is drawn to said loading position, and holds the movable control member (11) at said disk control position corresponding to the size of the disk (9, 10) held in the disk holder (7, 8).

## Patentansprüche

1. Disk-Wiedergabevorrichtung, enthaltend: einen Diskhalter (7, 8) zur Aufnahme einer Disk (9, 10), Wiedergabemittel (3) zur Wiedergabe einer Disk (9, 10) und Halterbewegungs-Steuermittel (5) zum Herausziehen des Diskhalters (7, 8) aus seiner Startposition in eine Ladeposition nahe dem Wiedergabemittel (3), zum Einspannen einer Disk (9, 10), welche von dem Diskhalter (7, 8) aufgenommen ist, auf dem Wiedergabemittel (3) und zum anschließenden Zurückführen des Diskhalters (7, 8) in die Startposition;
**dadurch gekennzeichnet, dass** das Wiedergabemittel (3) ein drehbares Steuerelement (11), das an seinem einen Ende einen Disksteuerabschnitt (13) zum Positionieren der Disk (9, 10) mit Bezug auf die normale Einspannposition und an seinem anderen Ende einen Halteranlageabschnitt (12) für die Anlage an dem Diskhalter (7, 8) aufweist, und Druckbeaufschlagungsmittel (14) zum Druckbeaufschlagen des drehbaren Steuerelements (11) in die von der Disk (9, 10) wegweisende Richtung enthält, und
dass das drehbare Steuerelement (11) dazu vorgesehen ist, über den Halteranlageabschnitt (12) durch diesen Diskhalter (7, 8) herabgedrückt zu werden, wenn der Diskhalter (7, 8) in die Ladeposition herausgezogen und der Disksteuerposition gehalten wird, die der Größe der Disk (9, 10), welche in dem Diskhalter (7, 8) aufgenommen ist, entspricht und die Disk mit Bezug auf die normale Einspannposition zu positionieren.

2. Disk-Wiedergabevorrichtung nach Anspruch 1, enthaltend mehrere Arten an Diskhaltern (7, 8), von denen jeder eine unterschiedlich große Disk (9, 10) aufnehmen kann, wobei das drehbare Steuerelement (11) in der Lage ist, eine der unterschiedlich großen Disks (9, 10) mit Bezug auf die normale Einspannposition mittels des Disksteuerabschnitts (13) entsprechend der einen unterschiedlich großen Disk (9, 10) zu positionieren; und
wobei jeder aus der Vielzahl an verschiedenen Arten an Diskhaltem (7, 8) einen Anlageabschnitt (7a, 8a) aufweist, welcher an dem Halteranlageabschnitt (12) des drehbaren Steuerelements (11) anliegt und den Halteranlageabschnitt (12) des drehbaren Steuerelements (11) herabdrückt, wenn der Diskhalter (7, 8) zu der Ladeposition gezogen wird, und das bewegbare Steuerelement (11) an der Disksteuerposition entsprechend der Größe der Disk (9, 10), die in dem Diskhalter (7, 8) gehalten wird, hält.

## Revendications

1. Dispositif de reproduction de disque, comprenant : une cassette de disque (7, 8) destinée à loger un disque (9, 10), un moyen de reproduction (3) destiné à reproduire un disque (9, 10) et un moyen de commande de déplacement de la cassette (5) destiné à extraire la cassette de disque (7, 8) d'une position initiale de celle-ci à une position de chargement près dudit moyen de reproduction (3), placer sur un mandrin un disque (9, 10) qui est logé dans la cassette de disque (7, 8) sur le moyen de reproduction (3), et ramener alors la cassette de disque (7, 8) vers ladite position initiale,
**caractérisé en ce que** ledit moyen de reproduction (3) comprend un élément de commande rotatif comportant à une extrémité de celui-ci une section de commande de disque (13) destinée à positionner le disque (9, 10) par rapport à ladite position normale de positionnement sur un mandrin, et à l'autre extrémité de celui-ci une section de butée de cassette (12) destinée à buter contre la cassette de disque (7, 8) et un moyen de sollicitation (14) destiné à solliciter l'élément de commande rotatif (11) dans la direction qui l'écarte du disque (9, 10),
et **en ce que** ledit élément de commande rotatif (11) est configuré pour être pressé par cette cassette de disque (7, 8) par l'intermédiaire de ladite section de butée de cassette (12) lorsque la cassette de disque (7, 8) est extraite vers ladite position de chargement et maintenue à une position de commande de disque correspondant à la taille du disque (9, 10) logé dans cette cassette de disque (7, 8), et pour positionner le disque (9, 10) par rapport à ladite position normale de positionnement sur un mandrin.

2. Dispositif de reproduction de disque selon la revendication 1, comprenant plusieurs types de cassettes de disques (7, 8) dont chacune peut recevoir un disque de taille différente (9, 10), où ledit élément de commande rotatif (11) est configuré pour positionner l'un des disques de différentes tailles (9, 10) par rapport à ladite position normale de positionnement sur un mandrin au moyen de ladite section de commande de disque (13) correspondant audit l'un des disques de différentes tailles (9, 10), et
chacun desdits plusieurs types de cassettes de disques (7, 8) comprend une section de butée (7a, 8a) qui bute contre ladite section de butée de cassette (12) dudit élément de commande rotatif (11) et la presse lorsque la cassette de disque (7, 8) est extraite vers ladite position de chargement, et maintient l'élément de commande mobile (11) à ladite position de commande de disque correspondant à la taille du disque (9, 10) contenu dans la cassette de disque (7, 8).
